# EUROPEAN PATENT APPLICATION

(11) **EP 4 836 146 A1**
(43) Date of publication of application: **04.11.2026**
(21) Application number: 25173803.5
(22) Date of filing: 30.04.2025
(51) Int. Cl.: H01M 50/271, H01M 50/325, H01M 50/342, H01M 50/367, H01M 50/383

(54) **VENT ARRANGEMENTS FOR BATTERY PACK**

(71) Applicant: Ford Global Technologies, LLC, Dearborn, MI 48126 (US)
(72) Inventor: STOTHARD, Christopher, Billericay, CM11 2DR (GB); COX, David, London, SE16 5XJ (GB); PETRIDIS, Themi, Bishop's Stortford, CM23 3NG (GB); ETHERIDGE, Paul, Crowborough, TN6 2EA (GB)
(74) Representative: HG Law International LLP

(57) **Abstract**

The present disclosure provides a top cover for a battery pack and a battery pack, with the top cover configured to be attached to a battery pack which comprises a plurality of battery arrays and to substantially enclose the battery arrays within the battery pack. The top cover comprises a first wall and a second wall, the first wall and second wall spaced away from one another by at least one sidewall, the top cover configured such that the top cover is hollow, and the top cover comprises at least one vent ingress port and at least one vent outlet aperture which vents to atmosphere, such that the top cover provides a fluid flow path between the at least one vent ingress port and the at least one vent outlet aperture.

## Description

### FIELD OF INVENTION

The present disclosure relates to battery packs, and more particularly to a top cover for a battery pack, a battery pack, and a vehicle comprising a battery pack designed for efficient venting of gases during cell venting events.

### BACKGROUND

Battery packs are widely used as power sources in various applications, including electric vehicles, portable electronic devices, and energy storage systems. These battery packs typically consist of multiple battery cells arranged in arrays and connected to form a high-capacity power unit. As the demand for higher energy density and longer-lasting batteries increases, manufacturers continue to develop more advanced battery technologies.

One aspect of battery pack design is managing potential thermal events. In some cases, battery cells may experience temperature increases, leading to a phenomenon known as thermal runaway. During thermal runaway, gases and particulates may be rapidly released from affected cells.

Additionally, the complex internal structure of battery packs, including busbars, terminals, and other electrical connections, can make efficient gas venting challenging. Furthermore, it is desirable to protect the battery pack's electrical components from exposure to the hot, potentially conductive gases and particulates released during cell venting.

### SUMMARY

This Summary is provided to introduce a selection of concepts in a simplified form that are further described below in the Detailed Description.

In a first aspect, a top cover for a battery pack is provided. The top cover is configured to be attached to a battery pack which comprises a plurality of battery arrays and to substantially enclose the battery arrays within the battery pack. The top cover comprises a first wall and a second wall, the first wall and second wall spaced away from one another by at least one sidewall, the top cover configured such that the top cover is hollow. The top cover comprises at least one vent ingress port and at least one vent outlet aperture which vents to atmosphere, such that the top cover provides a fluid flow path between the at least one vent ingress port and the at least one vent outlet aperture.

This top cover design provides an effective means for managing gas venting from battery arrays while maintaining a sealed environment within the battery pack. The hollow configuration with a dedicated fluid flow path allows for controlled gas release.

The second wall of the top cover may be generally adjacent a cover surface of the plurality of battery arrays.

Positioning the second wall adjacent to the battery arrays ensures efficient gas collection from the arrays and minimizes the distance gases need to travel to enter the fluid flow path.

The at least one vent ingress port may pass through the second wall.

This configuration allows for direct gas entry from the battery arrays into the fluid flow path.

The at least one vent ingress port may be a rigid, tubular structure which extends into the fluid flow path.

The rigid, tubular structure provides a durable and defined pathway for gases to enter the fluid flow path.

The at least one vent ingress port may each comprise a burst region.

Incorporating burst regions in the vent ingress ports may allow for controlled gas release under high-pressure conditions.

Each burst region may comprise a frangible portion.

The frangible portion may ensure a predictable and reliable rupture point for pressure release.

The frangible portion may be configured to rupture at a pre-determined pressure level.

This feature allows for precise control over when additional venting occurs, optimizing the balance between containment and pressure relief.

The at least one vent ingress port may comprise a one-way valve.

A one-way valve prevents backflow of gases into the battery arrays, maintaining the integrity of the venting system and protecting the battery components.

The top cover may form the top cover of respective battery arrays within the battery pack.

This integrated design simplifies the overall structure of the battery pack and ensures consistent venting performance across all arrays.

The second wall may form a top surface of a respective battery array within the battery pack.

By forming the top surface of the battery arrays, the second wall provides a direct interface for gas venting.

Each respective battery array may be in fluid communication with a separate hollow portion of the top cover.

This configuration allows for individualized venting of each battery array.

Each respective battery array may include a separate vent ingress port into each separate hollow portion of the top cover.

Providing separate vent ingress ports for each array ensures dedicated venting pathways, further enhancing the system's ability to manage gas release from individual arrays.

The opposing surfaces of the first wall and the second wall may be coated in a silicate mineral.

Coating the surfaces with a silicate mineral enhances the heat resistance and electrical insulation properties of the top cover.

In a second aspect, a battery pack comprising the top cover of the first aspect and at least one battery array is provided.

This integrated battery pack design incorporates the advanced venting capabilities of the top cover.

In a third aspect, a vehicle comprising the battery pack of the second aspect is provided.

### BRIEF DESCRIPTION OF FIGURES

Embodiments of the invention will be described, by way of example, with reference to the following drawings, in which:
FIG. 1 illustrates a battery pack including a top cover in accordance with that which is described herein;
FIG. 2 illustrates another battery pack including a top cover in accordance with that which is described herein; and
FIG. 3 illustrates a vehicle which incorporates a battery pack including the busbar protection as described herein.

Common reference numerals are used throughout the figures to indicate similar features.

### DETAILED DESCRIPTION

The present disclosure relates to battery packs and, more particularly, to a top cover for a battery pack designed for efficient venting of gases during cell venting events. Battery packs typically comprise multiple battery cells arranged in arrays and connected to form a high-capacity power unit. As the demand for higher energy density and longer-lasting batteries increases, managing potential thermal events becomes increasingly important.

In some cases, battery cells may experience temperature increases, leading to a phenomenon known as thermal runaway. During such events, hot gases may be released from the cells.

The top cover described herein provides a solution for managing gases released during cell venting events. The top cover is configured to be attached to a battery pack and substantially enclose the battery arrays within the battery pack. The top cover includes features that create a controlled pathway for vented gases, directing them away from components and out of the battery pack.

A battery pack may comprise the top cover and at least one battery array. The combination of the top cover and the battery arrays forms an integrated unit designed to efficiently manage thermal events and vented gases.

In some examples, a vehicle may comprise a battery pack that includes the top cover. The top cover is configured to be attached to a battery pack and substantially enclose battery arrays within the battery pack. The top cover comprises a first wall and a second wall spaced away from one another by at least one sidewall, such that the top cover is hollow.

The top cover may be formed from a silicate mineral. In some examples, the silicate mineral is mica. Mica provides properties such as heat resistance and electrical insulation that may be beneficial for use in a battery pack environment.

The top cover may be configured to be sealed to a periphery of the battery pack. This sealing helps contain gases within the designated flow paths of the top cover. In some examples, the top cover may be attached to a top surface of arrays which form the battery pack.

The opposing surfaces of the first wall and the second wall may be coated in a silicate mineral. This coating can provide additional thermal and electrical insulation properties to the interior surfaces of the top cover.

In some examples, the top cover may be incorporated as a separate fixed part elsewhere in the battery pack, rather than forming the uppermost surface. This configuration allows for flexibility in battery pack design while still providing the gas management benefits of the top cover.

The second wall of the top cover may be generally adjacent to a cover surface of the plurality of battery arrays when installed. This proximity allows for efficient gas transfer from the arrays into the hollow interior of the top cover.

In some configurations, the top cover may be compartmentalized to provide dedicated exhaust gas voids for each array row. This compartmentalization can help isolate vented gases from different arrays.

A lid may be included as part of the battery pack assembly. In some examples, the lid has a silicate layer on the inner surface. This silicate layer can provide additional thermal protection and insulation for the battery pack components.

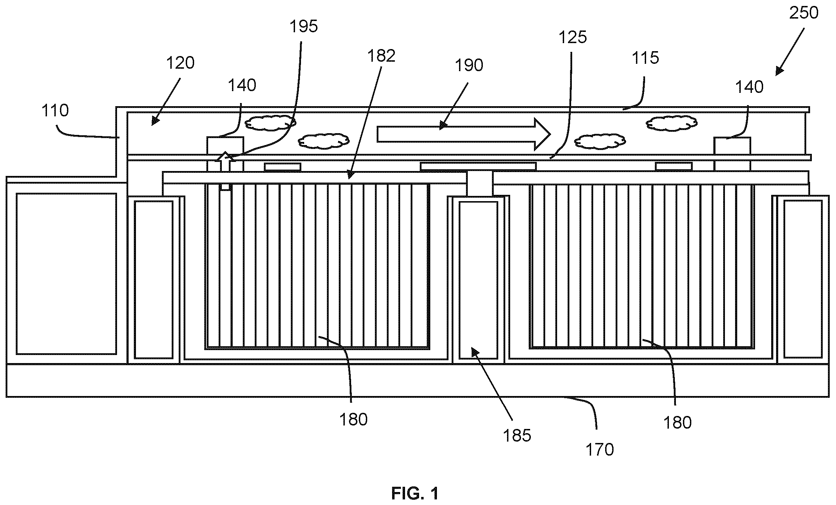

FIG. 1 illustrates a battery pack 250. The battery pack 250 may include a top cover 110. In some cases, the top cover 110 may be configured to be attached to the battery pack 250 and substantially enclose battery arrays within the battery pack 250. The top cover 110 may comprise a first wall 115 and a second wall 125. The first wall 115 and the second wall 125 may be spaced away from one another, defining a hollow portion 120 between the first wall 115 and the second wall 125.

FIG. 1 illustrates a sectional side view of the battery pack 250 including the top cover 110. As shown in FIG. 1, the top cover 110 may be positioned above the battery arrays within the battery pack 250. The second wall 125 of the top cover 110. The second wall 125 of the top cover 110 may be generally adjacent to the top surfaces of the battery arrays.

In some cases, the top cover 110 may be designed to the top cover 110 may be designed to the top cover 110 may be designed to accommodate cells of different shapes and sizes. This design flexibility may allow for a more bespoke cover shape tailored to specific battery applications. The hollow portion 120 of the top cover 110 may serve as a dedicated space for managing gas venting during cell venting events.

The battery pack 250 may comprise the top cover 110 and at least one battery array. The top cover 110 may play a crucial role in the overall structure and functionality of the battery pack 250, providing both enclosure and gas management capabilities.

The top cover 110 of the battery pack 250 may comprise a first wall 115 and a second wall 125. In some cases, the first wall 115 and the second wall 125 may be spaced away from one another by at least one sidewall, creating a hollow portion 120 between the first wall 115 and the second wall 125. This configuration may allow the top cover 110 to be hollow, providing a dedicated space for gas management.

As depicted in FIG. 1, the hollow portion 120 may extend between the first wall 115 and the second wall 125, creating a fluid flow path within hollow portion 190. This fluid flow path within hollow portion 190 may allow for the movement of vented gases within the top cover 110.

In some cases, the top cover 110 may include a fluid flow path 195. The fluid flow path 195 may extend from below the second wall 125, through the second wall 125, and into the hollow portion 120. This configuration may allow gases vented from the battery arrays to enter the hollow portion 120 and flow along the fluid flow path within hollow portion 190.

The hollow portion 120 of the top cover 110 may be designed to manage and direct the flow of vented gases. In some cases, the hollow portion 120 may be compartmentalized to enable reduced heat transfer from the void space to non-venting arrays. This compartmentalization may help isolate the effects of venting in one area of the battery pack 250 from other areas.

In some cases, the opposing surfaces of the first wall 115 and the second wall 125 may be coated in a silicate mineral. This coating may provide additional thermal protection or other beneficial properties to the top cover 110.

In some cases, fire retardant materials may be used in the hollow portion 120 of the top cover 110.

The top cover 110 may comprise at least one vent ingress port 140 and at least one vent outlet aperture which vents to atmosphere. In some cases, the top cover 110 may provide a fluid flow path between the at least one vent ingress port 140 and the at least one vent outlet aperture.

As depicted in FIG. 1, the vent ingress ports 140 may pass through the second wall 125 of the top cover 110. This configuration may allow gases from a battery array 180 to enter the hollow portion 120 of the top cover 110.

In some cases, the vent ingress ports 140 may be rigid, tubular structures which extend into the fluid flow path within hollow portion 190. This design may help direct the flow of vented gases from the battery array 180 into the hollow portion 120.

The vent ingress ports 140 may each comprise a burst region. In some cases, each burst region may comprise a frangible portion. The frangible portion may be configured to rupture at a pre-determined pressure level. This feature may help control the release of gases from the battery array 180 into the hollow portion 120 during venting events.

In some cases, the vent ingress ports 140 may comprise a one-way valve. This valve may allow gases to flow from the battery array 180 into the hollow portion 120 while preventing backflow.

The vent ingress ports 140 may be designed as slots or chimneys extending from the arrays in the battery pack 250. This design may facilitate efficient gas flow from the battery array 180 into the hollow portion 120 of the top cover 110.

FIG. 1 shows a fluid flow path 195 extending from the battery array 180 through a vent ingress port 140 and into the hollow portion 120. This illustration demonstrates how gases may flow from the battery array 180, through the vent ingress port 140, and into the fluid flow path within hollow portion 190.

In some cases, an array top cover 182 may enclose components of the battery array 180. The vent ingress ports 140 may be positioned to allow gases to flow from beneath the array top cover 182, through the vent ingress ports 140, and into the hollow portion 120 of the top cover 110.

The battery pack 250 may include additional components that integrate with the top cover 110 to form a complete battery system. FIG. 1 illustrates some of these components and their arrangement within the battery pack 250.

In some cases, the battery pack 250 may include a cold plate 170. The cold plate 170 may be positioned below the battery array 180. The cold plate 170 may serve as a thermal management component, helping to control the temperature of the battery array 180 during operation.

The battery pack 250 may also include a pack cross member 185. As shown in FIG. 1, the pack cross member 185 may be positioned within the battery pack 250 to provide structural support. The pack cross member 185 may help maintain the integrity of the battery pack 250 and support the arrangement of other components.

The top cover 110 may be designed to integrate with these components. In some cases, the second wall 125 of the top cover 110 may be generally adjacent to a cover surface of the plurality of battery arrays. This configuration may allow for efficient use of space within the battery pack 250 while providing a dedicated area for gas management.

In some cases, the top cover 110 may form the top cover of respective battery arrays within the battery pack 250. This integration may allow for a more compact design and efficient use of space within the battery pack 250.

The second wall 125 of the top cover 110 may form a top surface of a respective battery array within the battery pack 250. This configuration may allow for direct communication between the battery array 180 and the hollow portion 120 of the top cover 110.

In some cases, each respective battery array may be in fluid communication with a separate hollow portion of the top cover 110. This arrangement may allow for compartmentalization of vented gases, potentially reducing heat transfer between arrays during venting events.

Each respective battery array may include a separate vent ingress port 140 into each separate hollow portion of the top cover 110. This configuration may allow for controlled venting from individual battery arrays into dedicated spaces within the top cover 110.

The integration of these components - the cold plate 170, pack cross member 185, battery array 180, and top cover 110 - may create a comprehensive system for battery management, thermal control, and gas handling within the battery pack 250.

The top cover comprises at least one vent ingress port and at least one vent outlet aperture which vents to atmosphere. The vent ingress ports are configured to be aligned with vent apertures in the top surface of the arrays which form the battery pack. This alignment allows for efficient transfer of gases from the arrays into the top cover during venting events.

The vent ingress ports may be configured to form a seal around the vent apertures in the top surface of the arrays. This sealing configuration helps ensure that gases are directed through the intended pathways within the top cover. In some examples, the vent ingress ports may be sealed around the vent apertures using thermal sealant, adhesive, or mechanical fasteners.

Each vent ingress port may comprise a burst region. The burst region is designed to provide controlled venting in case of overpressure within the battery pack. In some examples, each burst region comprises a frangible portion. The frangible portion may be configured to rupture at a pre-determined pressure level, allowing for the release of gases from the arrays into the top cover when a specific threshold is reached.

The vent ingress ports may be rigid, tubular structures which extend into the fluid flow path within the top cover. This configuration helps direct the flow of vented gases and may provide additional structural support to the top cover. In some examples, the vent ingress ports may pass through the second wall of the top cover, which is generally adjacent to the cover surface of the battery arrays.

In some configurations, at least two vent ingress ports may be aligned with at least two vent apertures of a single array. This arrangement can provide increased venting capacity for larger arrays or arrays with multiple venting points.

The vent ingress ports may incorporate one-way valves. These valves allow gases to flow from the arrays into the top cover but prevent backflow, which may help maintain the integrity of the venting system and protect the arrays from potential contaminants.

The top cover may include a dedicated valve for gas exit. This valve may be located on the top cover or in a separate position away from the battery pack. The dedicated exit valve works in conjunction with the vent ingress ports to create a controlled flow path for vented gases through the top cover and out of the battery pack.

The configuration of the vent ingress ports, burst regions, and exit valves within the top cover creates a fluid pathway from the arrays to the atmosphere. This pathway allows for the controlled release of gases during venting events, helping to manage thermal events and protect components within the battery pack.

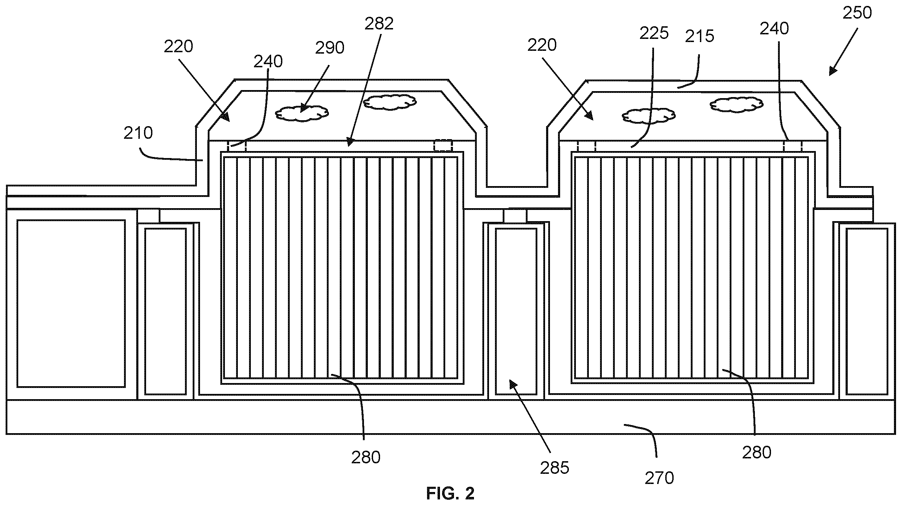

FIG. 2 shows another battery pack 250 arrangement including a top cover as described herein. The battery pack 250 shown in FIG. 2 may include a top cover 210, which may provide an alternative configuration to the top cover 110 described in relation to FIG. 1. FIG. 2 illustrates a sectional side view of the battery pack 250 incorporating the top cover 210.

In some cases, the top cover 210 may comprise a first wall 215 and a second wall 225, similar to the configuration shown in FIG. 1. However, the top cover 210 may include a hollow portion 220 that differs in shape or dimensions from the hollow portion 220 depicted in FIG. 1. The hollow portion 220 may provide a fluid flow path for fluid flow 290 within the top cover 210.

The top cover 210 may include at least one vent ingress port 240. In some cases, the vent ingress port 240 may extend through the second wall 225 into the hollow portion 220, allowing for fluid communication between a battery array 280 and the hollow portion 220. The vent ingress port 240 may differ in size, shape, or positioning compared to the vent ingress port 140 shown in FIG. 1.

A battery array 280 may be positioned below the top cover 210. The battery array 280 may include an array top cover 282, which may enclose components of the battery array 280. The array top cover 282 may be positioned adjacent to the second wall 125 of the top cover 210.

In some cases, the top cover 210 may be incorporated as a separate fixed part elsewhere in the battery pack 250, not just as the top cover. This alternative configuration may allow for greater flexibility in the design and layout of the battery pack 250.

The battery pack 250 may include a cold plate 270 positioned below the battery array 280. The cold plate 270 may serve a similar function to the cold plate 170 described in relation to FIG. 1, providing thermal management for the battery array 280.

A pack cross member 285 may be included in the battery pack 250, providing structural support similar to the pack cross member 185 shown in FIG. 1. The pack cross member 285 may be positioned to accommodate the alternative configuration of the top cover 210.

In some cases, the vent outlet aperture of the top cover 210 may be located on the top cover 210 itself or in a separate position away from the battery pack 250. This flexibility in positioning the vent outlet aperture may allow for optimized gas venting based on the specific requirements of the battery pack 250 or the vehicle in which the battery pack 250 may be installed.

The fluid flow 290 within the hollow portion 220 may follow a different path compared to the fluid flow path within hollow portion 190 described in relation to FIG. 1. The alternative configuration of the top cover 210 may influence the direction and characteristics of the fluid flow 290, potentially affecting the gas management capabilities of the battery pack 250.

The top cover includes terminal apertures configured to be aligned with terminals of the arrays which form the battery pack. These terminal apertures allow for electrical connections to be made to the battery arrays while maintaining the integrity of the top cover's venting system.

In some examples, the terminal apertures are further configured to form a seal around the terminals of the arrays. This sealing configuration helps prevent gas leakage around the terminals and ensures that vented gases are directed through the intended pathways within the top cover.

The terminal apertures may incorporate additional features to enhance the overall performance of the battery pack. In some configurations, each terminal aperture comprises a burst region. These burst regions are designed to provide an additional pathway for pressure release if needed. The burst regions in the terminal apertures may be configured to rupture at a pre-determined pressure level, allowing for controlled gas release near the terminals if necessary.

The incorporation of burst regions in the terminal apertures provides multiple pathways for pressure release, enhancing the overall venting capabilities of the top cover. These features are designed to work in conjunction with the other venting mechanisms of the top cover, directing any released gases towards the designated venting areas of the battery pack.

The terminal apertures may be arranged in various configurations depending on the layout of the battery arrays and their terminals. In some examples, the terminal apertures may be grouped in sets, with each set corresponding to a specific array or section of the battery pack. This arrangement allows for efficient electrical connections while maintaining the venting capabilities of the top cover.

The top cover provides a fluid flow path between at least one vent ingress port and at least one vent outlet aperture. This fluid flow path is configured to direct gases released during cell venting events towards designated vent apertures in the battery pack. The flow path is created within the hollow interior of the top cover, between the first wall and the second wall.

When gases are released from a battery array through a vent ingress port, the gases enter the fluid flow path within the top cover. The configuration of the top cover directs these gases along the flow path towards the vent outlet aperture. This controlled gas movement helps manage thermal events by guiding hot gases away from sensitive components within the battery pack.

The fluid flow path may be designed with various features to enhance its effectiveness. For example, the interior surfaces of the top cover may be shaped or textured to promote efficient gas flow. Additionally, baffles or other flow-directing structures may be incorporated within the flow path to guide gases towards the vent outlet aperture.

In some examples, fire retardant materials may be used in the isolated space created by the top cover. These fire retardant materials can provide additional protection against thermal events. The fire retardant materials may be applied as a coating on the interior surfaces of the top cover or incorporated as separate components within the fluid flow path.

The use of fire retardant materials in the isolated space can help suppress or contain potential fires that may occur during extreme venting events. These materials may also help reduce the temperature of vented gases as they move through the fluid flow path.

The configuration of the fluid flow path, combined with the use of fire retardant materials, creates a comprehensive system for managing gases released during cell venting events. This system helps direct gases away from components and out of the battery pack, while also providing additional protection against thermal events.

The top cover integrates with the overall battery pack structure to enhance thermal management. The top cover forms the top cover of respective battery arrays within the battery pack, providing a unified structure that encloses and protects the arrays.

A second wall of the top cover is generally adjacent to a cover surface of the plurality of battery arrays. This configuration allows for efficient heat transfer and gas management between the arrays and the top cover. In some examples, the second wall forms a top surface of a respective battery array within the battery pack, creating a seamless integration between the arrays and the top cover.

The top cover includes separate hollow portions that correspond to individual battery arrays. Each respective battery array is in fluid communication with a separate hollow portion of the top cover. This compartmentalization allows for isolated gas management for each array.

To facilitate the transfer of gases from the arrays to the top cover, each respective battery array includes a separate vent ingress port into each separate hollow portion of the top cover. These vent ingress ports provide dedicated pathways for gases to enter the top cover's hollow portions during venting events.

The integration of the top cover with the battery pack structure creates a comprehensive system for managing thermal events and vented gases. The top cover works in conjunction with other components of the battery pack, such as a lid and vent apertures, to direct gases along controlled pathways and out of the battery pack.

This integrated design enhances the pack's thermal management capabilities by providing dedicated spaces for gas expansion and controlled venting. The compartmentalized structure of the top cover allows for localized management of thermal events.

The controlled gas pathways and dedicated venting ports may help prevent the buildup of pressure within the battery pack during venting events. This pressure management can minimize the potential for uncontrolled gas release.

In some examples, the top cover may incorporate additional features. These features may include thermal barriers between compartments, pressure relief mechanisms, or sensors to monitor conditions within the hollow portions of the top cover.

The integration of the top cover with the battery pack structure allows for a cohesive approach to thermal management. By incorporating the top cover as an integral part of the battery pack design, manufacturers can create more efficient and effective systems for managing cell venting events and enhancing overall battery pack performance.

The top cover for a battery pack works in conjunction with various elements to efficiently manage gas venting during cell venting events. The hollow structure of the top cover, formed by the first wall, second wall, and sidewalls, creates a dedicated space for gas flow. This space serves as a controlled pathway for vented gases, directing them away from sensitive components within the battery pack.

Vent ingress ports in the top cover align with vent apertures in the battery arrays. When a cell venting event occurs, gases released from the arrays enter the hollow interior of the top cover through these vent ingress ports. The configuration of the vent ingress ports, which may include features such as one-way valves or burst regions, helps control the flow of gases into the top cover.

Once inside the top cover, the gases follow a fluid flow path created by the internal structure. This flow path guides the gases towards one or more vent outlet apertures. The design of the flow path may incorporate features such as baffles or textured surfaces to promote efficient gas movement.

The vent outlet apertures provide a controlled exit point for the gases to vent to the atmosphere. These apertures may include valves or other mechanisms to control gas release and prevent backflow.

In examples where the top cover forms the top surface of individual battery arrays, the compartmentalized structure allows for localized gas management. Each array may have a dedicated hollow portion within the top cover, with separate vent ingress ports. This configuration helps isolate venting events to specific areas of the battery pack.

The use of heat-resistant materials, such as silicate minerals, in the construction of the top cover enhances its ability to withstand high temperatures associated with cell venting events. Coatings on the interior surfaces of the top cover may provide additional thermal protection and insulation.

Terminal apertures in the top cover allow for electrical connections while maintaining the integrity of the gas management system. These apertures may incorporate seals to prevent gas leakage.

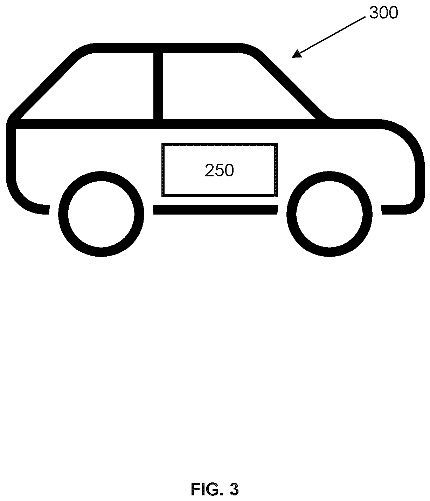

The battery pack 250 may be integrated into a vehicle 300. FIG. 3 illustrates a simplified side orthogonal view of the vehicle 300 containing the battery pack 250. The figure shows a basic outline representation of the vehicle 300 with the battery pack 250 positioned within the vehicle's structure.

FIG. 3 shows a vehicle including a battery pack 250 including a top cover as described herein. In some cases, the battery pack 250 may be positioned in the lower portion of the vehicle 300. This placement may contribute to a lower centre of gravity for the vehicle 300, potentially enhancing stability and handling characteristics.

The size and shape of the battery pack 250 may be designed to fit efficiently within the available space in the vehicle 300 while providing the necessary energy storage capacity.

In some cases, the relative size of the battery pack 250 compared to the overall vehicle 300 may vary depending on the specific vehicle model and its energy requirements. The battery pack 250 may occupy a significant portion of the vehicle's undercarriage, extending along much of the vehicle's length.

The integration of the battery pack 250 into the vehicle 300 may involve considerations of structural support and thermal management. In some cases, the vehicle 300 may be designed with specific mounting points or reinforced areas to accommodate the weight and dimensions of the battery pack 250.

The positioning of the battery pack 250 within the vehicle 300 may also take into account factors such as weight distribution and accessibility for maintenance or replacement. In some cases, the battery pack 250 may be designed as a modular unit that can be easily integrated into different vehicle platforms.

The integration of these elements creates a comprehensive system for managing gases released during cell venting events. The top cover structure contains and directs gases, while the flow path and outlet apertures provide a controlled means of venting these gases from the battery pack.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A top cover for a battery pack, the top cover configured to be attached to a battery pack which comprises a plurality of battery arrays and to substantially enclose the battery arrays within the battery pack, wherein:
the top cover comprises a first wall and a second wall, the first wall and second wall spaced away from one another by at least one sidewall, the top cover configured such that the top cover is hollow,
the top cover comprises at least one vent ingress port and at least one vent outlet aperture which vents to atmosphere, such that:
the top cover provides a fluid flow path between the at least one vent ingress port and the at least one vent outlet aperture.

2. The top cover of claim 1, wherein the second wall is generally adjacent a cover surface of the plurality of battery arrays.

3. The top cover of claim 1 or claim 2, wherein the at least one vent ingress port passes through the second wall.

4. The top cover of any preceding claim, wherein the at least one vent ingress port is a rigid, tubular structure which extends into the fluid flow path.

5. The top cover of any preceding claim, wherein the at least one vent ingress port each comprise a burst region.

6. The top cover of claim 5, wherein each burst region comprises a frangible portion.

7. The top cover of claim 6, wherein the frangible portion is configured to rupture at a pre-determined pressure level.

8. The top cover of any preceding claim, wherein the at least one vent ingress port comprises a one-way valve.

9. The top cover of claim 1, wherein the top cover forms the top cover of respective battery arrays within the battery pack.

10. The top cover of claim 9, wherein the second wall forms a top surface of a respective battery array within the battery pack.

11. The top cover of claim 10, wherein each respective battery array is in fluid communication with a separate hollow portion of the top cover.

12. The top cover of claim 11, wherein each respective battery array includes a separate vent ingress port into each separate hollow portion of the top cover.

13. The top cover of any preceding claim, wherein opposing surfaces of the first wall and the second wall are coated in a silicate mineral.

14. A battery pack comprising the top cover of any one of claims 1-13 and at least one battery array.

15. A vehicle comprising the battery pack of claim 14.
